# DEMANDE DE BREVET EUROPEEN

(11) **EP 0 932 314 A1**
(43) Date de publication de la demande: **28.07.1999**
(21) Numéro de dépôt: 99400159.2
(22) Date de dépôt: 25.01.1999
(51) Int. Cl.: H04Q 7/20

(54) **Dispositif pour identifier un terminal appelé parmi une pluralité de terminaux d'usager reliés à un commutateur téléphonique, ce commutateur téléphonique étant relié à au moins un terminal radiotéléphonique fixe**

(30) Priorité: 26.01.1998 FR 9800768; 30.04.1998 FR 9805543
(71) Demandeur: ALCATEL, 75008 Paris (FR)
(72) Inventeur: Charpentier, Jean, 78220 Viroflay (FR); Issenmann, Edouard, 78150 Le Chesnay (FR)
(74) Mandataire: Sciaux, Edmond

(57) **Abrégé**

Des moyens (MSC1, HLR) renvoient un appel (52, 53), destiné à l'un de ces terminaux d'usager (UT1,..., UT100) et contenant le numéro d'annuaire (MSISDN1) du terminal d'usager (UT1) qui est appelé, vers un centre de commutation du service mobile (MSC2) permettant d'accéder au terminal d'usager (UT1) qui est appelé. Ces moyens envoient au centre de commutation du service mobile (MSC2), un message appelé IAM contenant le numéro d'annuaire (MSISDN1) du terminal d'usager qui est appelé. Le centre de commutation du service mobile (MSC2) fournit ce numéro d'annuaire à un terminal radiotéléphonique dans un message appelé SETUP. Ce terminal radiotéléphonique fixe (RTa, RTb, RTc) extrait du message SETUP, reçu pour l'établissement de chaque appel, le numéro d'annuaire du terminal d'usager (UT1) qui est appelé, et envoie ce numéro au commutateur (SW) sous la forme d'un message de signalisation classique.

## Description

L'invention concerne un dispositif pour identifier un terminal appelé parmi une pluralité de terminaux d'usager reliés à un commutateur téléphonique qui est relié à un réseau téléphonique classique par au moins un terminal radiotéléphonique fixe permettant de remplacer une liaison par câble. Chaque terminal radiotéléphonique fixe remplit des fonctions analogues à celles d'un terminal radiotéléphonique portable classique, mais il relie au réseau téléphonique ce commutateur, au lieu de relier un seul usager.

Ce commutateur est par exemple un petit commutateur desservant un hôtel, ou un village, situé dans une région isolée où la pose d'un câble serait trop coûteuse. Ce commutateur dessert un groupe de terminaux d'usager fixes en assurant le routage des appels arrivant du réseau public. Chaque terminal radiotéléphonique fixe est utilisé successivement pour différents terminaux d'usager, puisque ceux-ci ne sont pas utilisés en permanence. Plusieurs terminaux radiotéléphoniques peuvent se partager une même bande de fréquence grâce à une répartition dans le temps, ou par code.

L'invention concerne plus particulièrement les réseaux radiotéléphoniques de type GSM, et ceux de types dérivés du type GSM qui comporteront un satellite stationnaire ou des satellites à défilement. Les réseaux de type GSM présentent les caractéristiques suivantes :
- Une zone géographique découpée en cellules, pour permettre la réutilisation des fréquences porteuses.
- Une passerelle gère les ressources de chaque cellule, en ce qui concerne les fréquences porteuses et la pluralité de canaux portés par chaque fréquence porteuse.
- Au moins un centre de commutation du service radio mobile gère : les appels, les connexions avec le réseau téléphonique fixe, et des bases de données. Ces dernières contiennent le numéro d'annuaire, le numéro international d'abonné mobile, et la localisation de chaque abonné mobile.

Les réseaux GSM classiques ou dérivés ne sont pas conçus pour que plusieurs abonnés utilisent un même terminal d'usager. L'usager personnalise le terminal qu'il utilise en y insérant une carte d'identification appelée SIM (Subscriber identification module) contenant une identité internationale d'abonné mobile appelée IMSI (international mobile subscriber identity), qui détermine le compte sur lequel seront facturés les appels. Après une phase d'initialisation, ce terminal est désigné dans les messages radio par une identité temporaire d'abonné mobile, appelée TMSI (Temporary mobile subscriber identity), qui permet de protéger l'anonymat de l'usager. D'autre part, une procédure d'authentification utilise une clé secrète contenue dans la carte d'identification SIM, pour empêcher un fraudeur d'utiliser l'identité IMSI ou l'identité TMSI d'un autre usager, lorsqu'un appel est émis et lorsqu'un appel est reçu.

L'utilisation de plusieurs terminaux radiotéléphoniques fixes pour relier un même commutateur à un réseau GSM pose un problème de fourniture, au commutateur, de l'identité de la ligne appelante.

Le but de l'invention est de proposer un dispositif simple qui résolve ce problème.

L'objet de l'invention est un dispositif pour identifier un terminal appelé parmi une pluralité de terminaux d'usager reliés à un commutateur téléphonique, ce commutateur téléphonique étant relié à au moins un terminal radiotéléphonique fixe, chaque terminal radiotéléphonique fixe comportant des moyens pour communiquer avec un réseau téléphonique fixe ; ce dispositif comportant des moyens pour renvoyer un appel, destiné à l'un de ces terminaux d'usager et contenant le numéro d'annuaire du terminal d'usager qui est appelé, vers un centre de commutation du service mobile permettant d'accéder au terminal d'usager qui est appelé ;
**caractérisé** en ce que les moyens pour renvoyer un appel, destiné à l'un de ces terminaux d'usager comportent des moyens pour envoyer, au centre de commutation du service mobile, un message appelé IAM contenant le numéro d'annuaire du terminal d'usager qui est appelé ;
en ce que le centre de commutation du service mobile comporte en outre des moyens pour fournir ce numéro d'annuaire à un terminal radiotéléphonique fixe, dans un message appelé SETUP ;
et en ce que chacun desdits terminaux radiotéléphoniques fixes comportent des moyens pour extraire du message SETUP, reçu pour l'établissement de chaque appel, le numéro d'annuaire du terminal d'usager qui est appelé, et pour envoyer ce numéro au commutateur sous la forme d'un message de signalisation classique.

Le dispositif ainsi caractérisé permet de réaliser de manière simple la sélection directe à l'arrivée, le commutateur pouvant se comporter comme un commutateur relié à un réseau fixe, pour faire la sélection directe à l'arrivée.

L'invention sera mieux comprise et d'autres caractéristiques apparaîtront à l'aide de la description ci-dessous et des figures l'accompagnant :
- La **figure 1** représente le schéma synoptique d'un exemple de réseau de télécommunication comportant le dispositif selon l'invention ;
- La figure 2 représente un diagramme temporel illustrant le fonctionnement du réseau représenté sur la figure 1, en utilisant le dispositif selon l'invention pour identifier le terminal d'usagé appelé.

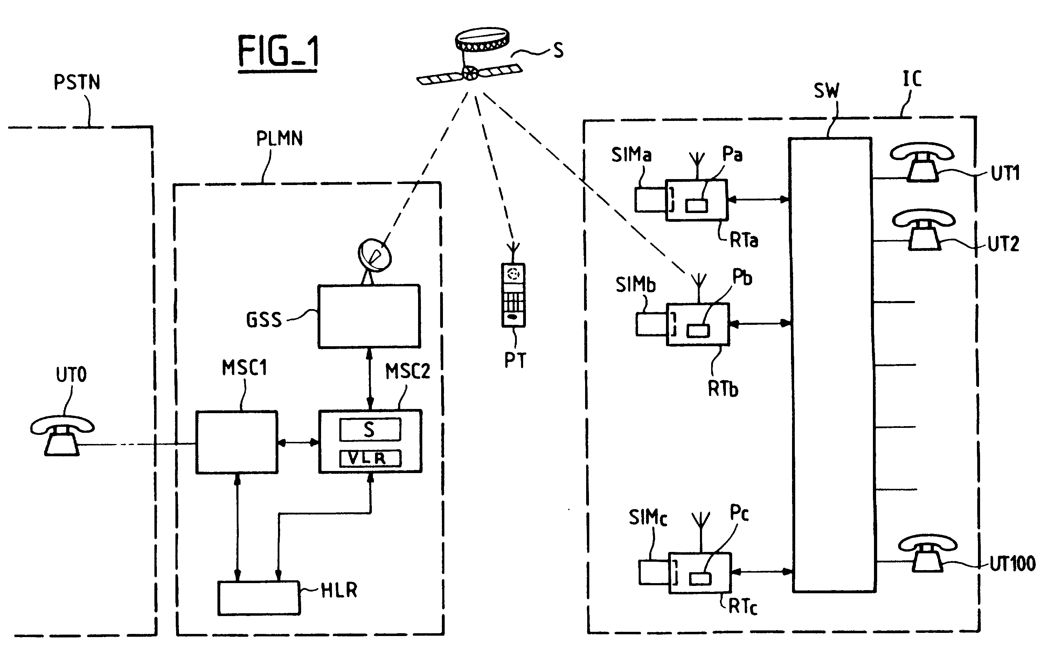

La figure 1 représente le schéma synoptique d'un exemple de réseau public de télécommunication comportant le dispositif selon l'invention, et assurant un service de téléphonie à une communauté IC située dans une région isolée. Cette communauté isolée IC est desservie par un petit commutateur privé SW auquel sont reliés cent terminaux téléphoniques classiques UT1,...,UT100, par exemple. Le commutateur SW est relié à un réseau téléphonique commuté national, PSTN (Public switched telephone network), par l'intermédiaire d'un réseau de radiotéléphonie PLMN (Public land mobile network), de type dérivé du type GSM.

Le réseau PLMN comporte un satellite géostationnaire ou plusieurs satellites à défilement, et dessert principalement des terminaux radiotéléphoniques mobiles PT. Un centre de commutation pour le service radio mobile, MSC2, est relié à un satellite S par une passerelle GSS (Gateway subsystem) qui maintient une liaison radio avec le satellite S. Le réseau PLMN comporte notamment deux centres de commutation du service radio mobile, MSC1, MSC2, et une base de données appelée enregistreur de localisation nominale.

Le commutateur SW communique avec le satellite S au moyens de trois terminaux radiotéléphoniques fixes RTa, RTb, RTc. Chaque terminal radiotéléphonique fixe RTa, RTb, RTc est relié par un câble téléphonique classique au commutateur SW ; et comporte un lecteur de carte dans lequel est inséré une carte d'identification SIM1, SIM2, SIM3 respectivement. Chaque terminal radiotéléphonique fixe RTa, RTb, RTc possède respectivement un processeur P1, P2, P3 muni d'un programme qui détermine le fonctionnement de ce terminal. Le fonctionnement est identique à celui d'un terminal radiotéléphonique classique, de type GSM ou dérivé. Un mode de réalisation préférentiel consiste à utiliser de manière fixe un terminal radiotéléphonique classique.

Tous les terminaux d'usager UT1,..., UT100 correspondent respectivement à des abonnements et bénéficient d'un renvois inconditionnel vers la ligne correspondant au terminal radiotéléphonique RTa qui est le premier de la liste des terminaux radiotéléphoniques RTa, RTb, RTc susceptibles d'être utilisés pour acheminer une communication vers ces terminaux d'usager UT1,..., UT100. Si ces abonnement sont du type "abonné radiomobile", les terminaux UT1,..., UT100 ont chacun une identité internationale d'abonné mobile (mais n'a pas de carte SIM, car elle n'est pas utile à un abonné qui ne se déplace pas). Si ces abonnements sont du type "abonné fixe", les terminaux UT1,..., UT100 ont chacun un classique numéro d'annuaire.

La fonction de sélection directe à l'arrivée est réalisée selon un procédé qui nécessite une modification du logiciel de l'ordinateur qui commande le centre de commutation MSC2 qui dessert les terminaux radiotéléphoniques RTa, RTb, RTc. Lors de l'établissement d'une communication, le centre MSC2 envoie un message appelé SETUP et qui contient, au lieu de contenir le numéro d'annuaire (MSISDNa/b/c) du terminal radio fixe RTa, RTb, ou RTc, conformément aux normes GSM :
- soit le numéro d'annuaire MSISDN (Mobile station's ISDN directory number) du terminal d'usager appelé, s'il a un abonnement du type "abonné radiomobile",
- soit le numéro d'annuaire classique, s'il a un abonnement du type "abonné fixe".

Le terminal RTa, RTb, ou RTc, qui est en charge d'une communication, retransmet ce numéro d'annuaire au commutateur SW pour que ce dernier puisse sélectionner le terminal d'usager qui est appelé. Le logiciel de chaque terminal RTa, RTb, ou RTc est modifié pour extraire, du message SETUP reçu pour l'établissement de chaque appel, le numéro d'annuaire du terminal d'usager UT1, ..., UT100 qui est appelé ; et pour envoyer ce numéro au commutateur SW, sous la forme de messages de signalisation classiques, afin de permettre au commutateur de sélectionner le terminal d'usager, qui est appelé.

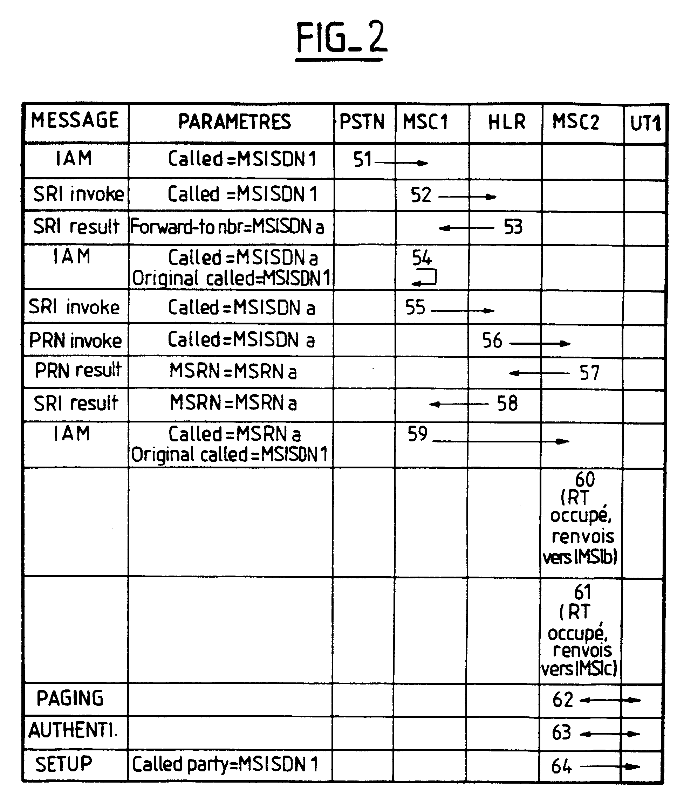

La **figure 2** représente un diagramme temporel illustrant le fonctionnement du réseau représenté sur la figure 1, en utilisant le dispositif selon l'invention pour identifier le terminal d'usagé appelé. Ce fonctionnement consiste à renvoyer un appel successivement vers chacun des terminaux radiotéléphoniques RTa, RTb, RTc, d'une liste prédéterminée, jusqu'à ce qu'on en trouve un qui soit disponible. Dans l'exemple considéré, les différentes étapes réalisées sont :
51) Un usager du réseau fixe PSTN décroche le combiné d'un terminal UT0 et compose le numéro d'annuaire du terminal UT1 situé dans la communauté isolée IC. Comme le numéro d'annuaire est un numéro du réseau mobile PLMN, un centre de rattachement (non représenté) du terminal UT0 envoie, à un centre MSC1 de commutation du service radio mobile, un message référencé IAM (Initial Address Message) demandant l'établissement d'un communication avec le terminal UT0 en désignant le terminal UT1 par son numéro d'annuaire MSISDN1. Ce centre MSC1 joue seulement le rôle de point d'accès au réseau PLMN, vis à vis du terminal UT0.
52) Le centre MSC1 envoie un message de demande d'information de routage référencé SRI (Send Routing Information), à l'enregistreur de localisation nominale, HLR, du réseau PLMN.
53) L'enregistreur HLR répond au centre MSC1 par un message lui commandant d'acheminer l'appel vers le terminal radio RTa, en désignant celui-ci, par son numéro d'annuaire MSISDNa.
54) Le centre MSC1 renvoie alors l'appel en envoyant à lui-même un message IAM (Initial Address Message) demandant l'établissement d'une communication avec le terminal radiotéléphonique RTa, en le désignant par son numéro d'annuaire MSISDNa. D'autre part, il place dans un champ, appelé "ORIGINAL CALLED NUMBER", de ce message, le numéro d'annuaire MSISDN1 désignant le terminal UT1 qui est appelé, afin de permettre une sélection directe à l'arrivée de l'appel dans le commutateur SW.
55) Le centre MSC1 envoie donc, à l'enregistreur de localisation nominale HLR, un message, référencé SRI invoke, de demande d'information de routage.
56) L'enregistreur HLR envoie alors un message demandant un numéro de passage au centre MSC2 de commutation du service mobile, parce que c'est le centre qui dessert le terminal dont le numéro d'annuaire est MSISDNa.
57) Le centre MSC2 répond à l'enregistreur HLR par un message référencé PRN result qui contient un numéro de passage MSRNa correspondant au numéro d'annuaire MSISDNa. Ce numéro de passage permet d'établir une communication téléphonique avec le terminal RTa.
58) L'enregistreur HLR envoie un message, référencé SRI result, contenant des informations de routage constituées par le numéro de passage MSRNa.
59) Le centre MSC1 envoie donc un message IAM de demande d'adresse initiale au centre MSC2, ce message contenant le numéro de passage MSRNa et le numéro initialement appelé, MSISDN1.
60) Dans cet exemple, le centre MSC2 constate que le terminal RTa désigné par le numéro de passage MSRNa est occupé. Il renvoie cet appel vers le numéro IMSlb.
61) Dans cet exemple, le centre MSC2 constate que le terminal RTb désigné par le numéro IMSlb est occupé, lui aussi. Il renvoie cet appel sur le numéro IMSlc.
62) Dans cet exemple, le centre MSC2 constate que le terminal RTc désigné par le numéro IMSlc est libre. Il émet un message de recherche ("PAGING") du terminal RTc.
63) Le centre MSC2 authentifie le terminal RTc.
64) Le centre MSC2 envoie au terminal RTc un message référencé SETUP, destiné commutateur SW, ce message contenant le numéro initialement demandé MSISDN1. Ce numéro est utilisé par le commutateur SW pour établir une connexion jusqu'au terminal demandé UT1.

Le numéro initialement demandé est placé de préférence dans le champ appelé "Called Party BCD Number" du message SETUP, mais il est possible de le placer dans tout autre champ de message.

Si les abonnement des terminaux UT1,..., UT100 sont du type "abonné fixe" et dépendent d'un commutateur local du réseau téléphonique classique PSTN, les fonctions décrites ci-dessus qui sont remplies par le centre MSC1 sont remplies par ce centre de commutation local du réseau téléphonique classique PSTN.

## Revendications

1. Dispositif pour identifier un terminal appelé parmi une pluralité de terminaux d'usager (UT1,..., UT100) reliés à un commutateur téléphonique (SW), ce commutateur téléphonique étant relié à au moins un terminal radiotéléphonique fixe (RTa,...,RTc), chaque terminal radiotéléphonique fixe comportant des moyens (Pa, Pb, Pc) pour communiquer avec un réseau téléphonique fixe (PSTN) ; ce dispositif comportant des moyens (MSC1, HLR) pour renvoyer un appel (52, 53), destiné à l'un de ces terminaux d'usager (UT1,..., UT100) et contenant le numéro d'annuaire (MSISDN1) du terminal d'usager (UT1) qui est appelé, vers un centre de commutation du service mobile (MSC2) permettant d'accéder au terminal d'usager (UT1) qui est appelé ;
**caractérisé** en ce que les moyens (MSC1, HLR), pour renvoyer un appel (52, 53), destiné à l'un de ces terminaux d'usager (UT1) comportent des moyens (MSC1) pour envoyer (54), au centre de commutation du service mobile (MSC2), un message appelé IAM contenant le numéro d'annuaire (MSISDN1) du terminal d'usager qui est appelé ;
en ce que le centre de commutation du service mobile (MSC2) comporte en outre des moyens pour fournir ce numéro d'annuaire à un terminal radiotéléphonique fixe (RTa, RTb, RTc) dans un message appelé SETUP ;
et en ce que chacun desdits terminaux radiotéléphoniques fixes (RTa, RTb, RTc) comporte des moyens pour extraire du message SETUP, reçu pour l'établissement de chaque appel, le numéro d'annuaire du terminal d'usager (UT1) qui est appelé, et pour envoyer ce numéro au commutateur (SW) sous la forme d'un message de signalisation classique.
